# EUROPEAN PATENT APPLICATION

(11) **EP 4 311 213 A1**
(43) Date of publication of application: **24.01.2024**
(21) Application number: 22794690.2
(22) Date of filing: 19.04.2022
(51) Int. Cl.: H04M 3/42

(54) **CALL PROCESSING METHOD, AND DEVICE**

(30) Priority: 29.04.2021 CN 202110477128
(71) Applicant: Huawei Technologies Co., Ltd., Longgang Shenzhen, Guangdong 518129 (CN)
(72) Inventor: WU, Kanghua, Shenzhen, Guangdong 518129 (CN); WANG, Dong, Shenzhen, Guangdong 518129 (CN); LIU, Jian, Shenzhen, Guangdong 518129 (CN)
(74) Representative: MERH-IP Matias Erny Reichl Hoffmann Patentanwälte PartG mbB
(86) International application number: PCT/CN2022/087773
(87) International publication number: WO 2022/228219

(57) **Abstract**

This application provides a call processing method and a device. In the method, a media server receives a call request sent by a calling terminal, and further performs media negotiation with the calling terminal. The media server generates a 180 message, and sends the 180 message to the calling terminal. The media server further sends a media stream of first media content to the calling terminal based on a result of the media negotiation. Therefore, the media server generates the 180 message and sends the 180 message to the calling terminal, to simulate a scenario in which a called terminal rings, thereby fully using network resources and improving user experience.

## Description

This application claims priority to Chinese Patent Application No. 202110477128.7, filed with the China National Intellectual Property Administration on April 29, 2021 and entitled "CALL PROCESSING METHOD AND DEVICE", which is incorporated herein by reference in its entirety.

### TECHNICAL FIELD

This application relates to the communication field, and in particular, to a call processing method and a device.

### BACKGROUND

With introduction of an internet protocol multimedia subsystem (Internet Protocol Multimedia Subsystem, IMS)-based service, a wireless communication system may provide a high-definition voice call, a high-definition video call, and a ring back tone service (such as a video ring back tone).

In current VoLTE and Vo5G ring back tone systems, after a called terminal rings, a ring back tone server starts to perform early media negotiation and play a ring back tone. In this way, before the ring back tone is played, there is bypassed call waiting time (approximately 2 seconds to 6 seconds) for a calling user.

### SUMMARY

Embodiments of this application provide a call processing method and a device, to provide media content during call initiation for a calling terminal.

According to a first aspect, an embodiment of this application provides a call processing method. In the method, a media server receives a call request sent by a calling terminal, performs media negotiation with the calling terminal, generates a 180 message, and sends the 180 message to the calling terminal. Further, the media server sends a media stream of first media content to the calling terminal based on a result of the media negotiation.

In the foregoing method, the media server generates a ringing message (180 message), and sends the ringing message to the calling terminal, to simulate a scenario in which a called terminal rings, so that media content can be provided for the calling terminal without waiting for the called terminal to ring, to improve user experience, fully use network resources, and expand application of a service of playing the media content for the calling terminal before ringing.

In a possible design, the 180 message indicates that charging is not performed based on the 180 message, and the method further includes: The media server receives a response message sent by the called terminal, and sends the response message to the calling terminal, where the response message carries charging information. The response message may be specifically a 183 message or a 180 message sent by the called terminal. The response message does not carry SDP information.

In a possible design, the method further includes: The media server receives the 183 message sent by the called terminal. That the media server generates a 180 message includes: The media server generates the 180 message based on charging information carried in the 183 message, where the 180 message carries the charging information.

Therefore, the service of playing the media content for the calling terminal before ringing does not affect charging accuracy.

In a possible design, the call request carries SDP_Offer, and the media server further generates a 183 message, and sends the 183 message to the calling terminal, where the 183 message carries SDP_Answer that is generated by the media server and that is used to respond to SDP_Offer.

In a possible design, the 180 message generated by the media server carries SDP _Answer that is generated by the media server and that is used to respond to SDP_Offer.

In a possible design, that the media server generates a 180 message includes: The media server generates the 180 message based on indication information that is of a type of the calling terminal and that is carried in the call request or indication information that is of a network access type and that is carried in the call request. Alternatively, the media server generates the 180 message based on that the call request does not carry indication information for supporting a screen media ring service.

In a possible design, the media server further receives a call status prompt message, determines status prompt multimedia based on the call status prompt message, and sends a media stream of the status prompt multimedia to the calling terminal.

In a possible design, the media server further determines, based on the call status prompt message, that the called terminal is in an unreachable state, and triggers a called side to release a call resource.

In a possible design, the media server further receives a call status prompt message, and after receiving the call status prompt message, performs audio media negotiation and video media negotiation with the calling terminal. A result of the audio media negotiation is used to send an audio media stream of status prompt multimedia to the calling terminal. The media server further sends a video media stream of the first media content to the calling terminal based on a result of the video media negotiation.

In a possible design, that the media server performs media negotiation with the calling terminal specifically includes: The media server sends a first media negotiation request message to the calling terminal, where the first media negotiation request message carries first video media information of the media server. The media server receives a first media negotiation response message sent by the calling terminal, where the first media negotiation response message carries second video media information of the calling terminal. That the media server performs audio media negotiation and video media negotiation with the calling terminal specifically includes: The media server sends a second media negotiation request message to the calling terminal, where the second media negotiation request message carries the first video media information and third audio media information carried in the call status prompt message. The media server receives a second media negotiation response message sent by the calling terminal, where the second media negotiation response message carries the second video media information and fourth audio media information of the calling terminal. Further, the media server sends a video media stream of the first media content to the calling terminal based on the first video media information and the second video media information. The third audio media information and the fourth audio media information are used to send an audio media stream of the status prompt multimedia to the calling terminal.

According to a second aspect, an embodiment of this application provides a call processing method. In the method, a calling terminal sends a call request to a called terminal, performs media negotiation with a media server, and receives a 180 message generated by the media server. Further, the calling terminal receives, based on a result of the media negotiation, a media stream that is of first media content and that is sent by the media server, and plays the first media content.

In a possible design, the 180 message indicates that charging is not performed based on the 180 message, and the method further includes: The calling terminal receives a response message, where the response message carries charging information. The response message may be specifically a 183 message or a 180 message sent by the called terminal. The response message does not carry SDP information.

In a possible design, the calling terminal further performs audio media negotiation and video media negotiation with the media server, receives, based on a result of the video media negotiation, a video media stream that is of the first media content and that is sent by the media server, and plays a video of the first media content. The calling terminal further receives, based on a result of the audio media negotiation, an audio media stream that is of status prompt multimedia and that is sent by a telephony application server, and plays an audio of the status prompt multimedia.

In a possible design, that the calling terminal performs media negotiation with a media server includes: The calling terminal receives a first media negotiation request message sent by the media server, where the first media negotiation request message carries first video media information of the media server; and sends a first media negotiation response message to the media server, where the first media negotiation response message carries second video media information of the calling terminal. That the calling terminal performs audio media negotiation and video media negotiation with the media server includes: receiving a second media negotiation request message sent by the media server, where the second media negotiation request message carries the first video media information and third audio media information of the telephony application server; and sending a second media negotiation response message to the media server, where the second media negotiation response message carries the second video media information and fourth audio media information of the calling terminal, the result of the video media negotiation includes the first video media information and the second video media information, and the result of the audio media negotiation includes the third audio media information and the fourth audio media information.

According to a third aspect, this application provides an apparatus. The apparatus is configured to perform any method provided in the first aspect.

In a possible design, in this application, the apparatus may be divided into functional modules according to any method provided in the first aspect. For example, each functional module may be obtained through division based on each corresponding function, or two or more functions may be integrated into one processing module.

For example, in this application, the apparatus may be divided into a communication module and a processing module based on functions. It should be understood that the communication module may be further divided into a sending module and a receiving module, which are respectively configured to implement a corresponding sending function and a corresponding receiving function. For descriptions of possible technical solutions performed by the foregoing functional modules obtained through division and beneficial effects, refer to the technical solutions provided in the first aspect or the possible designs corresponding to the first aspect. Details are not described herein again.

In another possible design, the apparatus includes: a memory and a processor. The memory is coupled to the processor. The memory is configured to store instructions, and the processor is configured to invoke the instructions, to perform the method provided in the first aspect or the possible designs corresponding to the first aspect. It should be understood that the processor may have sending and receiving functions. In a possible design, the apparatus further includes a transceiver, configured to perform sending and receiving operations in the foregoing methods.

According to a fourth aspect, this application provides an apparatus. The apparatus is configured to perform any method provided in the second aspect.

In a possible design, in this application, the apparatus may be divided into functional modules according to any method provided in the second aspect. For example, each functional module may be obtained through division based on each corresponding function, or two or more functions may be integrated into one processing module.

For example, in this application, the apparatus may be divided into a communication module and a processing module based on functions. It should be understood that the communication module may be further divided into a sending module and a receiving module, which are respectively configured to implement a corresponding sending function and a corresponding receiving function. The apparatus may further include a playing module. For descriptions of possible technical solutions performed by the foregoing functional modules obtained through division and beneficial effects, refer to the technical solutions provided in the second aspect or the possible designs corresponding to the second aspect. Details are not described herein again.

In another possible design, the apparatus includes: a memory and a processor. The memory is coupled to the processor. The memory is configured to store instructions, and the processor is configured to invoke the instructions, to perform the method provided in the second aspect or the possible designs corresponding to the second aspect. It should be understood that the processor may have sending and receiving functions. In a possible design, the apparatus further includes a transceiver, configured to perform sending and receiving operations in the foregoing methods. In a possible design, the apparatus further includes an output device, configured to perform an operation of playing media in the foregoing methods.

According to a fifth aspect, this application provides a computer-readable storage medium, configured to store a computer program. The computer program includes instructions used to perform the method in any possible implementation of any one of the foregoing aspects.

According to a sixth aspect, this application provides a computer program product, including instructions used to perform the method in any possible implementation of any one of the foregoing aspects.

According to a seventh aspect, this application provides a chip, including: a processor, where the processor is configured to invoke, from a memory, and run a computer program stored in the memory, to execute instructions for the method in any possible implementation of any one of the foregoing aspects.

In this application, the sending action in the first aspect or the second aspect may be specifically replaced with sending under control of the processor. The receiving action in the first aspect or the second aspect may be specifically replaced with receiving under control of the processor. The playing action in the second aspect may be specifically replaced with playing under control of the processor.

According to an eighth aspect, this application provides a call processing system. The system includes a media server and a terminal device. The media server is configured to perform the method provided in the first aspect or the possible designs corresponding to the first aspect. The terminal device is configured to perform the method provided in the second aspect or the possible designs corresponding to the second aspect.

In a possible design, the system further includes a telephony application server. The telephony application server is configured to receive a call request sent by the terminal device, where the call request carries fourth audio media information of a calling terminal. The telephony application server is further configured to send a call status prompt message to the terminal device. The call status prompt message carries third audio media information of the telephony application server. Further, the telephony application server is further configured to send an audio media stream of status prompt multimedia to the terminal device based on the third audio media information and the fourth audio media information.

These aspects or other aspects of this application are simpler and easier to understand in the following descriptions.

### BRIEF DESCRIPTION OF DRAWINGS

FIG. 1 is a schematic diagram of an architecture of a call processing system according to an embodiment of this application;
FIG. 2A is a schematic diagram of an architecture of another call processing system according to an embodiment of this application;
FIG. 2B is a schematic diagram of an architecture of still another call processing system according to an embodiment of this application;
FIG. 3 is a schematic flowchart of a call processing method according to an embodiment of this application;
FIG. 4 is a schematic flowchart of another call processing method according to an embodiment of this application;
FIG. 5 is a schematic flowchart of still another call processing method according to an embodiment of this application;
FIG. 6 is a schematic flowchart of yet another call processing method according to an embodiment of this application;
FIG. 7 is a schematic diagram of a structure of a media server according to an embodiment of this application;
FIG. 8 is a schematic diagram of a structure of a terminal device according to an embodiment of this application; and
FIG. 9 is a schematic diagram of a structure of an apparatus according to an embodiment of this application.

### DESCRIPTION OF EMBODIMENTS

To make the objectives, technical solutions, and advantages of this application clearer, the following further describes implementations of this application in detail with reference to the accompanying drawings.

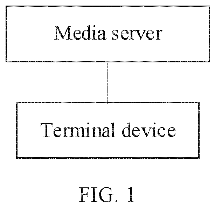

FIG. 1 is a schematic diagram of a possible system architecture to which an embodiment of this application is applicable. The system architecture may include devices such as a media server and a terminal device. It should be understood that for one call procedure, terminal devices include a calling terminal and a called terminal.

The media server is configured to: after the calling terminal initiates a call, provide first media content for the calling terminal when waiting for the called terminal to ring. The first media content may also be referred to as screen media ring media (content), call-initiated media (content), call ring in advance media (content), second-level media ring media (content), or the like. For ease of description, the following uses the screen media ring media as an example for description, and the call-initiated media, the second-level media ring media, and the like are also similar. Specifically, the first media content may include an audio and/or a video. For example, when the first media content includes a video, the first media content may also be referred to as a screen media ring video. For ease of description, a service of providing screen media ring media content for the calling terminal when waiting for the called terminal to ring after the calling terminal initiates a call is referred to as a screen media ring service, that is, a service of playing screen media ring media content for a calling user in advance before the called terminal rings. Similarly, the screen media ring service may also be referred to as a call ring in advance service, a second-level media ring service, or the like.

The media server may be specifically an independent server, or may be a network device integrated with another network element (for example, a ring back tone server). The media server may include a media application server and a media resource server (Multimedia Resource Server, MRS) device. The media application server and the MRS may be integrated or physically separated. The media application server processes a signaling message, and the MRS provides an audio stream and/or a video stream of multimedia (for example, the foregoing first media content or the following status prompt multimedia). It should be understood that the media server may alternatively include a media application server, but does not include an MRS. Specifically, the media server cooperates with the MRS to provide multimedia playing for the calling terminal. It should be understood that the media server may be specifically in a calling domain, or may be in a called domain. This is not limited in this application.

Specifically, the media server is configured to: receive a call request sent by the calling terminal, perform media negotiation with the calling terminal, generate a 180 message, send the 180 message to the calling terminal, and send a media stream of first media content to the calling terminal.

Correspondingly, the calling terminal is configured to: initiate a call to the called terminal, and play the first media content when waiting for the called terminal to ring. Specifically, the calling terminal is configured to: send the call request to the called terminal, perform media negotiation with the media server, receive the 180 message, receive, based on a result of the media negotiation, the media stream that is of the first media content and that is sent by the media server, and play the first media content. The 180 message is generated by the media server.

The terminal device (for example, the calling terminal or the called terminal) in this application is a device having a wireless transceiver function, and may be deployed on land, including an indoor or outdoor device, a handheld device, or a vehicle-mounted device; may be deployed on the water surface (for example, on a ship); or may be deployed in the air (for example, on an airplane, a balloon, or a satellite). Specifically, the terminal device may be a mobile phone, a tablet computer, a computer having a wireless transceiver function, a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart city, or the like.

In this application, the media server generates a ringing message (180 message), and sends the ringing message to the calling terminal, to simulate a scenario in which the called terminal rings, so that media content can be provided for the calling terminal without waiting for the called terminal to ring, to improve user experience and fully use network resources. The solution does not require the calling terminal to be upgraded to support media playing before ringing, and can also avoid a case in which the calling terminal cannot play the media content when the calling terminal does not receive the ringing message and a call failure that may be caused by this. Therefore, a success rate of playing the media content for the calling terminal before the called terminal rings is improved, and application of a service of playing the media content for the calling terminal before ringing is also expanded.

In an optional manner, the 180 message generated by the media server indicates that charging is not performed based on the 180 message. Further, the media server is further configured to receive a response message sent by the called terminal, and send the response message to the calling terminal, where the response message carries charging information for charging. Correspondingly, the calling terminal is further configured to receive the response message. The media server directly generates the 180 message without waiting for the response message returned by the called terminal. The 180 message may not carry the charging information, or may carry inaccurate charging information. Therefore, a core network element does not perform charging based on the 180 message, to avoid a charging error. Subsequently, after receiving the response message from the called terminal, the media server sends the response message, so that the core network element performs charging based on the charging information carried in the response message. Therefore, the 180 message is quickly sent to the calling terminal, to efficiently provide media content for the calling terminal, and avoid a charging problem caused by the 180 message generated by the media server.

In another optional manner, the media server is configured to receive a 183 message sent by the called terminal. Specifically, that the media server is configured to generate a 180 message includes: The media server is configured to generate the 180 message based on charging information carried in the 183 message, where the 180 message carries the charging information. The media server waits for the called terminal to return the 183 message, to obtain the charging information carried in the 183 message, and includes the charging information in the 180 message generated by the media server. Therefore, the charging information carried in the 180 message generated by the media server is accurate and may be used for charging. The core network element can directly perform charging based on the charging information carried in the 180 message. In this case, the core network element does not need to perform upgrade and improvement on the service of playing the media content for the calling terminal before ringing, to facilitate the application of the service.

The media server may be further configured to determine that the calling terminal does not support playing, before receiving the ringing message, multimedia, and further generate the 180 message. In an optional manner, the media server is configured to generate the 180 message based on indication information that is of a type of the calling terminal and that is carried in the call request or indication information that is of a network access type and that is carried in the call request. In another optional manner, the media server is configured to generate the 180 message based on that the call request does not carry indication information for supporting a screen media ring service. If the media server determines that the calling terminal supports playing, before receiving the ringing message, the multimedia, the media server does not need to generate the 180 message, and may directly perform media negotiation with the calling terminal and play the first media content for the calling terminal. In the method, while the success rate of playing the media content for the calling terminal before ringing is improved, unnecessary signaling transmission is avoided, and network resources are saved.

In an optional manner, the media server is further configured to: receive a call status prompt message, determine status prompt multimedia based on the call status prompt message, and send a media stream of the call status prompt multimedia to the calling terminal. In this method, the media server may identify a call status, to determine corresponding call status prompt multimedia, and notify the calling terminal of the current call status. Further, the media server may further determine, based on the call status prompt message, that the called terminal is in an unreachable state, and further trigger a called side to release a call resource, to save the network resource. The call status prompt message may be specifically sent by a telephony application server or the called terminal.

In another optional manner, the media server is configured to: perform audio media negotiation of status prompt multimedia and video media negotiation of the first media content with the calling terminal, and send a video media stream of the first media content to the calling terminal based on a result of the video media negotiation, where a result of the audio media negotiation is used to send an audio media stream of the status prompt multimedia to the calling terminal. Correspondingly, the calling terminal is configured to: perform the audio media negotiation and the video media negotiation with the media server, receive, based on the result of the video media negotiation, the video media stream that is of the first media content and that is sent by the media server, play a video of the first media content, receive, based on the result of the audio media negotiation, the audio media stream that is of the status prompt multimedia and that is sent by the telephony application server, and play an audio of the status prompt multimedia. Correspondingly, the system architecture may further include the telephony application server. The telephony application server is configured to send the audio media stream of the status prompt multimedia to the calling terminal based on the result of the audio media negotiation. Therefore, when the calling terminal is notified of the call status through the audio, the first media content may be played for the calling terminal in mute mode through the video, to fully use the network resource and improve user experience.

It should be understood that functions of the devices in this application are further described in detail in subsequent embodiments.

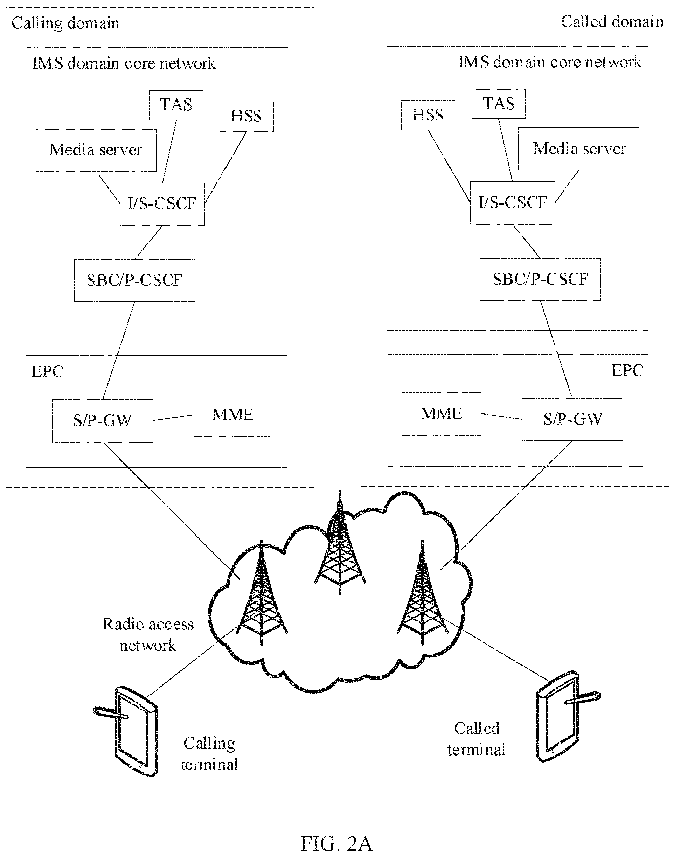

FIG. 2A is a schematic diagram of a specific possible network architecture to which an embodiment of this application is applicable by using a 4G communication system as an example. The network architecture may include a calling terminal, a called terminal, a wireless network, a calling domain network, and a called domain network.

The calling domain network and the called domain network each may include an internet protocol multimedia subsystem (internet protocol multimedia subsystem, IMS) domain core network and an evolved packet core (Evolved Packet Core, EPC). The IMS domain core network may include a media server. For a specific function, refer to the descriptions of the embodiment shown in FIG. 1. Specifically, the media server may be disposed in a calling domain, or may be disposed in a called domain. This is not limited in this application. The IMS domain core network may further include: a serving-call session control function (serving-call session control function, S-CSCF) device, an interrogating-call session control function (interrogating-call session control function, I-CSCF) device, a proxy-call session control function (proxy-call session control function, P-CSCF) device, a home subscriber server (home subscriber server, HSS), a session border controller (session border controller, SBC) device, a telephony application server (telephony application server, TAS), and the like. The I-CSCF device and the S-CSCF device may be integrated, and may be referred to as an "I/S-CSCF" device for short. The SBC device and the P-CSCF device may be integrated, and may be referred to as an SBC/P-CSCF device for short. The EPC may include a packet data network gateway (packet data network gateway, PGW) device, a serving gateway (serving gateway, SGW) device, a mobility management entity (mobility management entity, MME), and the like. The PGW device and the SGW device may be integrated, and may be referred to as an "SGW/PGW" device for short.

The devices mentioned above are briefly described below:

The S-CSCF device is used for user registration, session routing, service control, and the like. The I-CSCF device is responsible for assignment and query of an S-CSCF registered by a user, and the like. The P-CSCF device is responsible for proxy of signaling and messages, and the like. The TAS is mainly responsible for call control and services and provides a plurality of logical functions, including a multimedia telephony application server (Multimedia Telephony Application Server, MMTel AS). The MMTel AS provides a basic service and a supplementary service for multimedia telephony. In this application, the TAS is specifically configured to send a call status prompt message, and may be further configured to provide status prompt multimedia (an audio media stream or an audio and video media stream) for the calling terminal. The HSS is configured to store user data such as user subscription information and location information. The SBC device is configured to provide secure access and media processing. The MME is mainly responsible for session management, mobility management, call switching, and the like. The S/P-GW device is responsible for routing, forwarding, and bearer management of packet data, and the like.

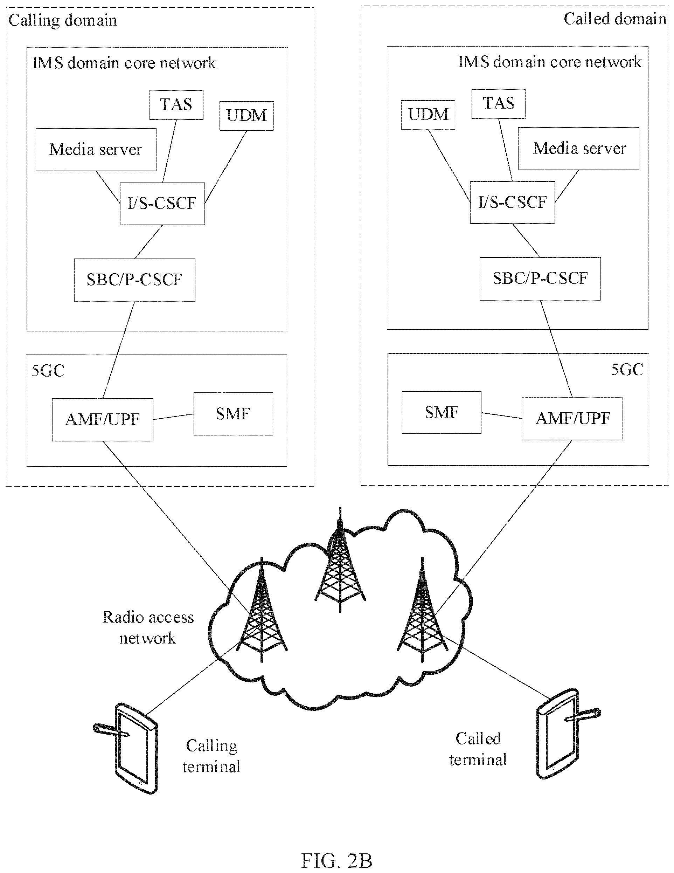

FIG. 2B is a schematic diagram of a specific possible network architecture to which an embodiment of this application is applicable by using a 5G communication system as an example. The network architecture may include a calling terminal, a called terminal, a wireless network, a calling domain network, and a called domain network.

The calling domain network and the called domain network each may include an IMS domain core network and a 5G core network (5G Core Network, 5GC). The IMS domain core network may include a media server, and may further include: an S-CSCF device, an I-CSCF device, a P-CSCF device, a unified data management (unified data management, UDM) device, an SBC device, a TAS, and the like. The 5GC may include an access and mobility management function (access and mobility management function, AMF) device, a user plane function (user plane function, UPF) device, a session management function (session management function, SMF) device, and the like.

The devices mentioned above are briefly described below:
The AMF device is used for mobility management in a mobile network (for example, user location update, registration of a user with a network, and user switching). The UPF device is configured to forward user plane data. The SMF device is used for session management (for example, session establishment, modification, and release) in the mobile network to control data forwarding of the UPF device. The UDM is configured to store and manage user subscription data and the like. For descriptions of other devices, refer to the descriptions of the embodiments shown in FIG. 1 and FIG. 2A above. Details are not described herein again.

It should be understood that this application may be further used in another future communication system, for example, a 6G communication system. This is also similar, and details are not described again.

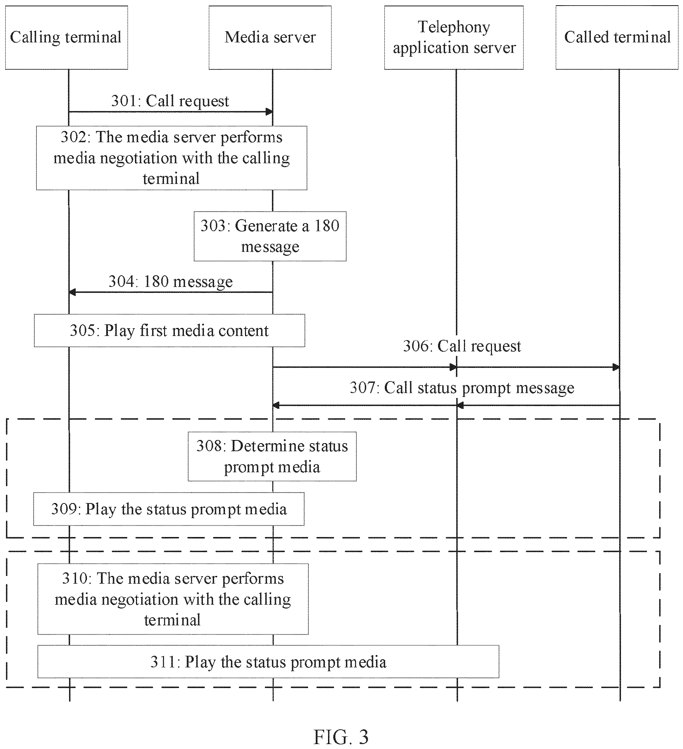

As shown in FIG. 3, an embodiment of this application provides a call processing method. A media server may be in a calling domain, or may be in a called domain. A telephony application server is in the called domain. To make descriptions concise and easy to understand, some network elements such as an SBC/P-CSCF and an I-CSCF/S-CSCF used for signaling exchange are not shown in the figure. The method specifically includes the following steps.

301: The media server receives a call request sent by a calling terminal.

When the calling terminal initiates a call to a called terminal, the calling terminal sends the call request (INVITE message) to the called terminal, where the call request carries media information (session description protocol SDP (Session Description Protocol) information) of the calling terminal. A calling IMS domain receives the call request. If a calling user subscribes to screen media ring media service initial filter criteria (initial Filter Criteria, iFC), the call request is sent by a calling domain IMS core network device (for example, the S-CSCF) to the media server in the calling domain. The calling IMS domain further forwards the call request to a called IMS domain. If a called user subscribes to the screen media ring media service iFC, the call request is sent by a called domain IMS core network device (for example, the S-CSCF) to the media server in the called domain. It should be understood that, when both the calling user and the called user subscribe to the screen media ring media service iFC, any one of the media servers or a media server with a higher priority may be responsible for playing screen media ring media for the calling terminal.

In an optional manner, the media server receives the call request, and may further determine, based on the call request, whether to play the screen media ring media for the calling terminal, to determine whether to trigger a processing procedure of playing the screen media ring media. For example, the media server determines, based on a "video" field carried in a contact header field in the call request or the call request indicating that this call is a video call, that the calling terminal supports video playing. Then, the processing procedure of playing the screen media ring media (where the screen media ring media enumerated herein includes video media) is triggered based on the following step (for example, 302). It should be understood that, if the media server determines not to play the screen media ring media for the calling terminal, processing is performed based on a common call procedure (which may include a ring back tone, a color tone, and the like), and details are not described herein.

302: The media server performs media negotiation with the calling terminal.

The media server performs media negotiation with the calling terminal on the screen media ring media.

Specifically, the media server sends a first media negotiation request message (for example, an UPDATE message) to the calling terminal, where the first media negotiation request message carries multimedia information of the media server. After receiving the first media negotiation request message, the calling terminal sends a first media negotiation response message to the media server, where the first media negotiation response message carries multimedia information of the calling terminal. The multimedia information is carried in an SDP protocol, and includes one or more of the following: a protocol, an address, and a port number for transmitting audio and/or video media, encoding and decoding information of the audio and/or video media, and the like.

The multimedia information of the media server may specifically include: first audio media information of the media server and/or first video media information of the media server. The media server may determine specific content of the multimedia information of the media server based on a media type of the screen media ring media (that is, first media content) to be played and/or a media capability of the media server. The media type specifically includes one or more of the following: an audio and a video. It should be understood that the media server may further determine, based on the call request, whether the calling terminal supports video playing, to determine whether to perform video negotiation with the calling terminal.

The multimedia information of the calling terminal may specifically include: second audio media information of the calling terminal and/or second video media information of the calling terminal. The calling terminal may determine specific content of the multimedia information of the calling terminal based on the multimedia information of the media server and a media capability of the calling terminal.

In an optional manner, before the media server performs media negotiation with the calling terminal, the media server further generates a 183 message, and sends the 183 message to the calling terminal. Specifically, the 183 message carries information that is of the called terminal and that is determined based on the call request, so that a 183 message sent by the called terminal can be simulated. For example, a To header field of the 183 message is consistent with a To header field of the call request. The 183 message further carries SDP information. The SDP information may be determined based on the media capability of the media server, or may be fictional.

The SDP information carried in the INVITE message in step 301 may be referred to as SDP_Offer, may also be referred to as a proposed SDP, a requested SDP, or the like, and indicates SDP information provided by a media negotiation initiator. The SDP information carried in the 183 message may be correspondingly referred to as SDP _Answer, may also be referred to as a response SDP, an answer SDP, or the like, and indicates SDP information provided by a media negotiation responder. Compared with the SDP information carried in the INVITE message, the SDP information carried in the 183 message complies with an offer/answer principle of SDP negotiation. For details, refer to documents such as RFC3264 and RFC8843. Therefore, the media server simulates the called terminal to send the 183 message to the calling terminal, to complete the media negotiation initiated by the calling terminal without waiting for the 183 message returned by the called terminal. Further, the 183 message may further indicate that charging is not performed based on the 183 message. Specifically, the 183 message may carry indication information of a screen media ring service (for example, an alert-info header field, a contact header field, or the like in the 183 message carries pre-ring or pre-media), to indicate that the 183 message is used for the screen media ring service and indicate that charging is not performed based on the 183 message. For example, if the alert-info header field in the 183 message carries alert-info:run:service:pre-ring, a core network element (for example, a charging device (including a traffic statistics device)) does not perform charging (including traffic statistics) based on the 183 message after receiving the 183 message. Alternatively, after receiving the 183 message, a core network element (for example, a P-CSCF device) does not send, to a charging device, charging information carried in the 183 message, so that charging is not performed based on the 183 message. Specifically, the 183 message may alternatively not carry the charging information, for example, does not carry charging-related header fields such as P-Charging-Vector and P-Access-Network-Info, to indicate that charging is not performed based on the 183 message.

303: The media server generates a 180 message.

The 180 message is a session initiation protocol (Session Initiation Protocol, SIP) message. For details, refer to standards such as RFC2543, RFC3261, and TS24.299. The 180 message may also be referred to as a ringing message (180 (ringing)). Usually, the 180 message indicates that the called terminal has rung, and is a message sent after the called terminal rings. In this application, the media server generates the 180 message to simulate a scenario in which the called terminal rings.

The 180 message carries information that is of the called terminal and that is determined based on the call request, so that a 180 message sent by the called terminal can be simulated. A From header field and a To header field of the 180 message are consistent with a From header field and a To header field of the call request (INVITE message), to simulate the ringing message sent by the called terminal without waiting for the called terminal to ring and then send the ringing message. In this embodiment of this application, the media server generates the 180 message, to simulate the 180 message (that is, the ringing message) sent by the called terminal.

The 180 message may further carry SDP information. In this case, the media server does not previously send the 183 message that carries the SDP information, and step 302 is performed after steps 303 and 304. The SDP information carried in the 180 message may be determined based on the media capability of the media server, or may be fictional. Compared with the SDP information (SDP _Offer) carried in the INVITE message in step 301, the SDP information carried in the 180 message may be referred to as SDP _Answer. Compared with the SDP information carried in the INVITE message, the SDP information carried in the 180 message complies with the offer/answer principle of SDP negotiation. That is, the 180 message may also complete the media negotiation initiated by the calling terminal, without waiting for the 183 message and/or the 180 message returned by the called terminal, and without simulating the called terminal to send the 183 message.

In an optional manner, the media server may further first determine whether to generate the 180 message, that is, determine whether the calling terminal has been upgraded to support the screen media ring service (that is, whether playing early media depends on receiving of the ringing message). Details are as follows:
(1) If the calling terminal has been upgraded to support the screen media ring service (where the calling terminal plays the early media independent of receiving of the ringing message), the media server does not generate the 180 message, but directly sends the first media content to the calling terminal, so that the calling terminal plays the first media content. Details are not described in this application.
(2) If the calling terminal has not been upgraded to support the screen media ring service (where the calling terminal plays the early media dependent on receiving of the ringing message), the media server generates the 180 message, to simulate the called terminal to send the ringing message to the calling terminal, and then sends the first media content to the calling terminal. When the calling terminal plays the early media dependent on receiving of the ringing message, if the calling terminal does not receive the ringing message, in this case, even if the calling terminal receives a media stream sent by the media server, the calling terminal does not play corresponding media content, but continues to wait for the ringing message. Therefore, even if the media server has completed media negotiation for the early media with the calling terminal and the media server has sent the media stream of the early media to the calling terminal, the media content cannot be played in advance. In addition, as described above, the media server may further generate the 183 message, to simulate the 183 message sent by the called terminal. However, if the media server only simulates the called terminal to send the 183 message but does not simulate the 180 message, the media content may not be played for the calling user in advance when the calling terminal has not been upgraded to support the screen media ring service, because the 183 message cannot replace the 180 message. However, in some cases, if the media server simulates the called terminal to send the 180 message but does not simulate the 183 message, the media content can be played for the calling user in advance. For example, the 180 message carries SDP_Answer to respond to SDP_Offer in the INVITE message.
(3) If it cannot be determined whether the calling terminal has been upgraded to support the screen media ring service, the media server generates the 180 message to ensure that the media content can be played for the calling user in advance.

This application provides a plurality of implementations for how the media server determines whether to generate the 180 message, including but not limited to one or more of the following: Determining is performed based on indication information that is of a type of the calling terminal and that is carried in the call request or indication information that is of a network access type and that is carried in the call request, and/or the call request indicating whether the screen media ring service is supported. It should be understood that, when a determining result is that the 180 message is generated, a determining condition such as the indication information that is of the type of the calling terminal and that is carried in the call request, the indication information that is of the network access type and that is carried in the call request, and/or the call request that does not carry indication information for supporting the screen media ring service is also a trigger condition for generating the 180 message.

Specifically, the media server determines, based on the indication information of the terminal type in the call request, whether the calling terminal supports the screen media ring service, that is, determines whether the 180 message is to be generated. It should be understood that the media server may store a set of terminal types that support the screen media ring service, or query, from another device based on the terminal type of the calling terminal, whether the calling terminal supports the screen media ring service. This is not limited in this application. The terminal type may include a terminal manufacturer, a terminal brand, a terminal model, and/or the like. For example, a User-Agent header field in the call request carries the indication information of the terminal type.

Specifically, a communication specification (standard) may stipulate that a terminal supporting the screen media ring service includes the indication information for supporting the screen media ring service in the call request (for example, a contact header field or a supported header field in the INVITE message carries pre-ring or pre-media). Therefore, if the call request carries the indication information for supporting the screen media ring service, the 180 message is not generated. If the call request does not carry the indication information for supporting the screen media ring service, the 180 message is generated. For example, it is stipulated that the terminal supporting the screen media ring service includes g.3gpp.cat-prering in the contact header field in the call request, and the media server generates the 180 message based on that the contact header field in the call request received in step 301 does not carry g.3gpp.cat-prering.

Specifically, the media server determines, based on a network access type of PANI (P-Access-Network-Info) in the call request, whether the calling terminal that accesses a network of this type supports the screen media ring service, that is, determines whether the 180 message is to be generated. The communication specification (standard) may stipulate that the terminal that accesses the network needs to support the screen media ring service. For example, a 5G standard requires that the terminal that accesses the network supports the screen media ring service (or has a capability of playing media content before ringing), and the call request includes the following content: P-Access-Network-Info: 3GPP-NR-FDD. In this case, the media server determines, based on the "3GPP-NR-FDD" field, that the calling terminal accesses a network of a 3GPP-NR-FDD type (belonging to a 5G network). That is, the media server determines that the calling terminal supports the screen media ring service, and therefore does not need to generate the 180 message to simulate the ringing message of the called terminal.

It should be understood that the foregoing several determining methods may be combined for determining. In addition, there are still some cases in which determining cannot be performed. For example, the media server does not store information about whether the terminal type of the calling terminal supports the screen media ring service, and the communication specification does not have a stipulation on the screen media ring service. As a result, whether the calling terminal supports the screen media ring service cannot be determined. In this case, the media server generates the 180 message to ensure that the media content can be played for the calling user in advance.

A charging device in an existing network, such as a convergent billing system (convergent billing system, CBS), performs charging based on charging information carried in the 1^{st} 18x message (specifically, a 183 message or a 180 message) received in a call procedure. To ensure charging accuracy without affecting charging (including traffic statistics) of the core network element, this application provides the following plurality of methods:
(1) The 180 message generated by the media server indicates that charging is not performed based on the 180 message. In this case, the charging device is also upgraded accordingly, so that charging is not performed based on the 180 message after the 180 message is received, to avoid a charging error. Specifically, the 180 message may carry the indication information for the screen media ring service, that is, it indicates that the 180 message is generated by the media server to implement the screen media ring service. For example, the alert-info header field or the contact header field in the 180 message carries pre-ring or pre-media. Optionally, the 180 message may alternatively not carry the charging information (such as the charging-related header fields such as P-Charging-Vector and P-Access-Network-Info). It should be understood that, when the 180 message carries the charging information, the charging information is generated by the media server, and is inaccurate. In other words, when the 180 message received by the core network element (for example, the P-CSCF device) indicates that charging is not performed based on the 180 message, the core network element does not send the information to the charging device to perform charging regardless of whether the 180 message carries the charging information.

Further, the media server receives a response message sent by the called terminal, where the response message carries the charging information (such as the charging-related header fields such as P-Charging-Vector and P-Access-Network-Info). The response message is specifically a 183 message or a 180 message sent by the called terminal. The media server sends the response message to the calling terminal, so that in a transmission process of the response message, the core network element (for example, the P-CSCF device) can receive the response message, and send the charging information carried in the response message to the charging device, to implement accurate charging. When the response message carries SDP information, the media server may delete the SDP information carried in the response message, and then send the response message, that is, the response message sent by the media server to the calling terminal does not carry the SDP information. This prevents media channel update from affecting playing of the screen media ring media. Alternatively, the media server may directly forward the response message to the calling terminal without deleting the SDP information carried in the response message. In a transmission process of the response message, after the core network element (for example, the P-CSCF device) receives the response message, the response message may not be sent to the calling terminal, so that the core network element can obtain the charging information carried in the response message, and the calling terminal does not receive the response message and is not affected by the SDP information carried in the response message.

It should be understood that when the response message indicates a call status, the response message may also be referred to as a call status prompt message. For details, refer to step 307.

(2) The media server receives the 183 message sent by the called terminal, and generates the 180 message based on the charging information carried in the 183 message, where the 180 message carries the charging information. The media server waits for the 183 message from a called side, and obtains the charging information in the 183 message (such as the charging-related header fields such as P-Charging-Vector and P-Access-Network-Info), so that the charging information is added to the 180 message when the 180 message is generated. The charging information carried in the 180 message is accurate. Therefore, after receiving the 180 message, the core network element (for example, the charging device) performs charging (including traffic statistics) based on the charging information carried in the 180 message. Alternatively, after receiving the 180 message, the core network element (for example, the P-CSCF device) sends the charging information carried in the 180 message to the charging device, to implement accurate charging. In this case, the core network element does not need to perform the upgrade described in (1).

304: The media server sends the generated 180 message to the calling terminal.

305: The media server sends a media stream of the first media content to the calling terminal, and the calling terminal receives the media stream of the first media content and plays the first media content.

Specifically, the media server sends the media stream of the first media content to the calling terminal based on a result of the media negotiation in step 302. Correspondingly, the calling terminal receives the media stream of the first media content based on the result of the media negotiation. The result of the media negotiation, that is, the multimedia information of the media server and the multimedia information of the calling terminal in step 302, specifically includes one or more of the following: a protocol, an address, and a port number for transmitting (sending and receiving) audio and/or video media of the first media content, and encoding and decoding information of the audio and/or video media of the first media content.

Specifically, the first media content may be determined based on a characteristic of the calling user. For example, the first media content may be determined based on a characteristic such as a number segment, a priority, a geographical location, and an age of the calling user. Alternatively, the first media content may be video content of a public type specified by an operator, such as education, security, prompting, or advertisement. Alternatively, the first media content may be preset by the calling user or the called user. This is not limited in this embodiment of this application.

306: After receiving the call request in step 301, the media server may forward the call request to the called terminal, to connect the called terminal.

It should be understood that, in a process of transmitting the call request to the called terminal, the call request may further pass through another network element device on the called side, such as the telephony application server (TAS) and/or a ring back tone server (if the called user has subscribed to a ring back tone service), and the like. This is not limited in this application.

It should be understood that a sequence of the steps in FIG. 3 is an example, and constitutes no limitation on the technical solutions of this application. For example, step 306 is performed after step 301. An execution sequence of step 306 and steps 302 to 305 is not limited in this application. Specifically, step 306 and step 302 may be performed simultaneously, step 306 may be performed before step 302, or step 306 may be performed after step 302. For another example, an execution sequence of step 304 and step 305 is not limited in this application. Specifically, the media server may first send the media stream to the calling terminal, and then send the 180 message to the calling terminal. Alternatively, the media server may send the 180 message to the calling terminal when sending the media stream to the calling terminal. Alternatively, the media server may further send the media stream to the calling terminal after sending the 180 message to the calling terminal.

307: The media server receives a call status prompt message.

The call status prompt message indicates a call status, for example, the called terminal has connected (where the called terminal has received the call request), the called terminal is in an unreachable state (including but not limited to: power-off, network unreachable, an unobtainable number, suspension, and the like), the called terminal has rung, there is a call waiting state, and the like.

The call status prompt message may be specifically a 180 message, a 183 message, an OXX message, or the like. The call status prompt message may be specifically sent by a device such as the TAS or the called terminal. For example, when the called terminal has been connected, the called terminal sends a 183 message, where the 183 message indicates that the called terminal has been successfully connected. For example, when a called number is an unobtainable number, a TAS in the called domain sends a 183 message, where the 183 message indicates that the called number is the unobtainable number. For example, when the called terminal has rung, the called terminal sends a 180 message, where the 180 message indicates that the called terminal has rung. For example, when the calling user is in arrears, a TAS in the calling domain sends an OXX message, where the OXX message indicates call barring due to arrears.

Further, how to properly notify the calling user of the call status may be considered to ensure integrity and rationality of the call procedure and help improve call experience. There are a plurality of specific methods. For example, the media server is responsible for playing status prompt multimedia, or the TAS is responsible for playing the status prompt multimedia. The following provides detailed descriptions.
1. The media server is responsible for playing the status prompt multimedia.

308: The media server determines the status prompt multimedia.

The media server determines the corresponding status prompt multimedia based on the received call status prompt message. Specifically, the media server may determine the call status based on the call status prompt message, and further determine the corresponding status prompt multimedia based on the call status. For example, the call status is a call waiting state, and status prompt multimedia for call waiting is determined. For example, when the call status is that the called number is an unobtainable number, status prompt multimedia for the called number is determined. Alternatively, the media server directly determines the corresponding status prompt multimedia based on call status indication information carried in the call status prompt message.

309: The media server sends a media stream of the status prompt multimedia to the calling terminal, and the calling terminal receives the media stream of the status prompt multimedia and plays the status prompt multimedia.

The media server may send the media stream of the status prompt multimedia to the calling terminal based on the result of the media negotiation in step 302. Correspondingly, the calling terminal receives the media stream of the status prompt multimedia based on the result of the media negotiation. For details about the result of the media negotiation, refer to the descriptions of step 305. Details are not described herein again. That is, the status prompt multimedia are played through the negotiated media channel in step 302. The status prompt multimedia may be specifically audio media, video media, or audio and video media. Specifically, the media server may play the status prompt multimedia for the calling terminal after playing of the first media content ends or after the first media content is played for fixed duration (for example, 3 seconds). Alternatively, the media server may simultaneously play the first media content and the status prompt multimedia for the calling terminal. For example, in step 302, if the negotiated media channel includes the audio and the video, the media server continues to send a video of the first media content, and sends an audio of the status prompt multimedia.

It should be understood that the media server may further perform media renegotiation with the calling terminal for the status prompt multimedia, to play the status prompt multimedia based on a re-negotiation result. For example, when media types of the status prompt multimedia and the first media content are different, the media server may perform renegotiation. A specific negotiation method is similar to that in step 302, and the first media content is replaced with the status prompt multimedia. Details are not described again.

In this case, when determining that the called terminal is in the unreachable state, the media server may further trigger the called side to release a call resource, to save network resources. Specifically, the media server determines, based on the call status prompt message, that the called terminal is in the unreachable state. Triggering the called side to release the call resources may specifically include: sending a call release indication message to the called side, so that the called side (specifically including each network element device, the called terminal, and/or the like in the called domain) releases the call resource. The call release indication message may be specifically a Cancel (cancel) message. The TAS receives the call resource release message, so that an announcement is not played for the calling terminal.

2. The TAS is responsible for playing the status prompt multimedia.

In this case, the media server coordinates the TAS to establish a media channel for playing the status prompt multimedia to the calling terminal, and then the TAS plays the status prompt multimedia for the calling terminal through the media channel. Specifically, the following steps are included.

310: The media server performs media negotiation with the calling terminal.

311: The TAS sends a media stream of the status prompt multimedia to the calling terminal, and the calling terminal receives the media stream of the status prompt multimedia and plays the status prompt multimedia.

In step 307, the call status prompt message may further carry media information of the TAS. The call status prompt message in step 307 is usually a response message to the call request message in step 301. Compared with the SDP information (SDP_Offer) of the calling terminal carried in the call request message in step 301, the media information of the TAS carried in the call status prompt message is SDP_Answer.

The media server performs media negotiation with the calling terminal based on the media information of the TAS. Specifically, the media server sends a second media negotiation request message to the calling terminal, where the second media negotiation request message carries media information of the TAS. The media server receives a second media negotiation response message returned by the calling terminal, where the second media negotiation response message carries media information of the calling terminal. In this negotiation, the media information of the TAS belongs to SDP _Offer, and the media information of the calling terminal belongs to SDP_Answer. This negotiation is mainly used to transfer the media information of the TAS to the calling terminal.

Usually, a protocol, an address, a port number, and/or the like for transmitting multimedia in the media information of the calling terminal carried in the second media negotiation response message are/is the same as the protocol, the address, and/or the port number for transmitting the multimedia in the SDP information carried in the call request message. However, other information such as multimedia encoding and decoding in the media information of the calling terminal carried in the second media negotiation response message is the same as other information such as multimedia encoding and decoding in the media information of the TAS. Therefore, in an optional manner, the TAS may send the media stream of the status prompt multimedia based on the media information of the TAS and the SDP information carried in the call request message. Correspondingly, the calling terminal receives the media stream of the status prompt multimedia based on the media information of the TAS and the media information of the calling terminal that is carried in the second media negotiation response message.

However, there may also be some special cases. For example, the port number for transmitting the multimedia in the media information of the calling terminal carried in the second media negotiation response message changes, and is different from the port number for transmitting the multimedia in the SDP information carried in the call request message. To ensure playing of the status prompt multimedia, the media server may further perform media negotiation with the TAS based on the media information of the calling terminal carried in the second media negotiation response message, that is, notify the TAS of the media information of the calling terminal. Then, the TAS sends the media stream of the status prompt multimedia based on a current negotiation result between the TAS and the media server. The calling terminal receives the media stream of the status prompt multimedia based on the negotiation result between the calling terminal and the media server. Details are not described again.

It should be understood that the foregoing status prompt multimedia may specifically include: an audio media, and/or a video media.

The media negotiation and playing of the status prompt multimedia are mainly described above. How to process the first media content that is originally played is described below.

In an optional manner, the TAS plays the status prompt multimedia for the calling terminal, and the media server stops playing the first media content for the calling terminal.

In an optional manner, the TAS plays an audio of the status prompt multimedia for the calling terminal, and the media server plays a video of the first media content for the calling terminal. Specifically, the media server performs audio media negotiation and video media negotiation with the calling terminal, and a result of the audio media negotiation is used to send an audio media stream of the status prompt multimedia to the calling terminal. The media server sends a video media stream of the first media content to the calling terminal based on a result of the video media negotiation. The TAS sends an audio media stream of the status prompt multimedia to the calling terminal. In this case, the media server may continue to use the video media channel negotiated in step 302, and use audio media information of the TAS sent by the TAS to negotiate an audio media channel with the calling terminal.

For ease of description, a negotiation case in step 302 is first described. In step 302, the media server sends the first media negotiation request message to the calling terminal, where the first media negotiation request message carries the first video media information of the media server. The media server further receives the first media negotiation response message sent by the calling terminal, where the first media negotiation response message carries the second video media information of the calling terminal. It should be understood that the audio media negotiation may further be included. This is not limited herein. That is, the first media content played in step 305 may include the audio and the video, and the first media content played in step 305 may also include only the video (that is, the screen media ring media is played in mute mode).

A negotiation case in step 310 is specifically as follows: The media server sends the second media negotiation request message to the calling terminal, where the second media negotiation request message carries the first video media information of the media server and third audio media information of the TAS. For ease of description, the audio media information in the media information of the TAS carried in the call status prompt message is referred to as the third audio media information. The media server further receives the second media negotiation response message sent by the calling terminal, where the second media negotiation response message carries the second video media information of the calling terminal and fourth audio media information of the calling terminal. Further, the media server continues to send the video media stream of the first media content to the calling terminal based on the first video media information and the second video media information, and the TAS sends the audio media stream of the status prompt multimedia to the calling terminal based on the third audio media information and the fourth audio media information. Correspondingly, the calling terminal receives the video media stream of the first media content based on the first video media information and the second video media information, and plays the video of the first media content; and receives the audio media stream of the status prompt multimedia based on the third audio media information and the fourth audio media information, and plays the audio of the status prompt multimedia.

The call procedure may further include other operations, such as playing a ring back tone and a color tone, connecting a call, and/or disconnecting a call. A person skilled in the art can understand how these operations are implemented. In addition, some related procedures are described in subsequent examples, and details are not described herein.

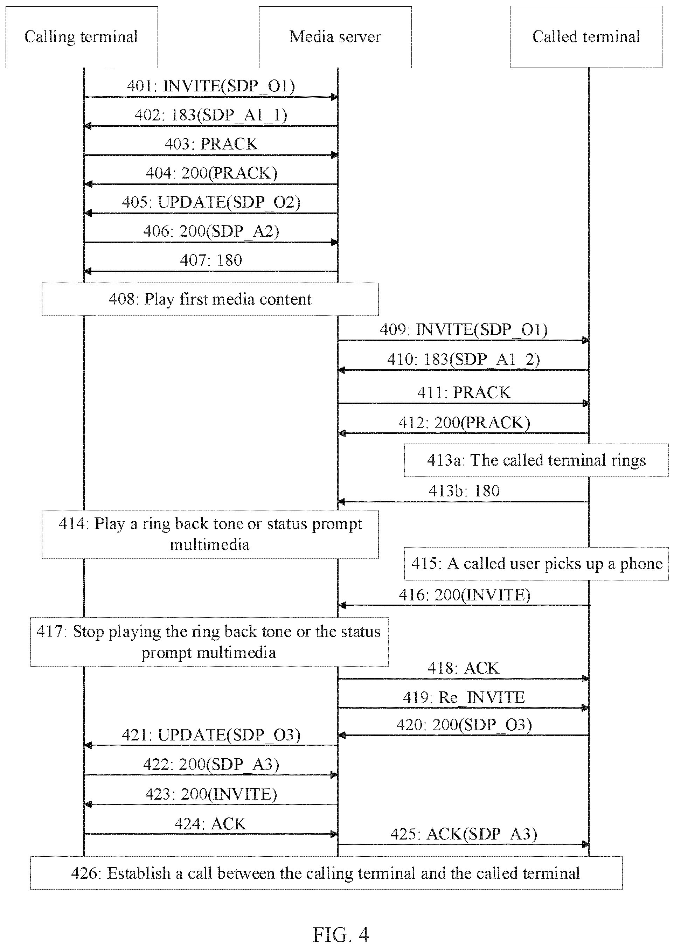

In an example, FIG. 4 provides a specific call processing method. A media server may be in a calling domain, or may be in a called domain. A TAS is in the called domain. To make descriptions concise and easy to understand, some network elements such as an SBC/P-CSCF and an I-CSCF/S-CSCF used for signaling exchange are not shown in the figure. The method specifically includes the following steps.

As shown in FIG. 4, the solution of the embodiment shown in FIG. 3 is specifically described by using an example. In this embodiment of this application, an example in which a called user successfully picks up a phone is used for description. The method includes the following steps.

401: The media server receives a call request (INVITE message) sent by a calling terminal.

The calling terminal initiates a voice call or a video call to a called terminal, and then sends an initial INVITE message. The INVITE message carries SDP information of the calling terminal, which is denoted as SDP_O1.

402: The media server sends a 183 message to the calling terminal.

The media server generates the 183 message and sends the 183 message to the calling terminal, to simulate the called terminal to send the 183 message to the calling terminal. A From header field and a To header field of the 183 message are consistent with a From header field and a To header field of the INVITE message, and the 183 message carries SDP information. The SDP information may be determined based on a media capability of the media server, or may be fictional, and is denoted as SDP _A1_1. The media server simulates, by using the 183 message, the called terminal to perform media negotiation with the calling terminal.

The 183 message may further indicate that charging is not performed based on the 183 message. For example, an alert-info header field of the 183 message carries run:service:pre-ring, so that a core network element does not collect statistics on the 183 message during charging (including traffic statistics).

The procedure in FIG. 4 is an example, and this application is not limited to the procedure. For example, for a procedure in which a resource reservation (Precondition) mechanism is used, an Update message and a 200 message are further added to indicate a completion status of resource reservation. Details are not described herein.

403: The media server receives an acknowledgment message (PRACK (Provisional Response Acknowledgement) message), for the 183 message, sent by the calling terminal.

404: The media server returns a 200 response message for the PRACK message to the calling terminal.

The media server performs media negotiation with the calling terminal. The media negotiation is performed for playing screen media ring media. Therefore, the media negotiation may also be referred to as negotiation for the screen media ring media (that is, first media content). The media negotiation specifically includes the following steps 405 and 406.

405: The media server sends an UPDATE message to the calling terminal, where the UPDATE message carries SDP information of the media server, which is denoted as SDP_O2.

406: The media server receives a 200 message returned by the calling terminal, where the 200 message carries the SDP information of the calling terminal, which is denoted as SDP_A2.

407: The media server generates a 180 message and sends the 180 message to the calling terminal.

In an optional manner, the media server generates the 180 message based on indication information that is of a type of the calling terminal and that is carried in the INVITE message in step 401 or indication information that is of a network access type and that is carried in the INVITE message in step 401. Alternatively, the media server generates the 180 message based on the INVITE message that does not carry indication information for supporting a screen media ring service. For details, refer to the descriptions of step 303 in the embodiment shown in FIG. 3. Details are not described herein again. It should be understood that a basis for determining whether to generate the 180 message is described herein. The following describes how to generate the 180 message.

Specifically, a From header field and a To header field of the 180 message are consistent with the From header field and the To header field of the INVITE message. Therefore, a 180 message sent by the called terminal can be simulated.

In an optional manner, the 180 message may further indicate that charging is not performed based on the 180 message. For example, an alert-info header field of the 180 message carries run:service:pre-ring, so that after receiving the 180 message, a CSCF device does not send charging information related to the 180 message to a charging device, to avoid a charging error. For example, the 180 message is as follows:
SIP/2.0 180 Ringing
Call-ID: z9hG4***@10.26.6.151
**From:** <**tel:**+**13050********>;tag=0o360***
**To:** < **tel:**+**18241********>;tag=99wjm***
CSeq: 1 INVITE
Allow: INVITE, ACK, CANCEL, BYE, UPDATE, PRACK, MESSAGE, REFER, NOTIFY, INFO, OPTIONS
Contact: <sip:10.34.212.88:5060>;+g.3gpp.icsi-ref="urn%3Aurn-7%3A3gpp-service.ims.icsi.mmtel";audio;video
**Alert-Info: run:service:pre-ring**
Content-Length: 0

In another optional manner, after step 410 (receiving the 183 message sent by the called terminal), the media server generates the 180 message based on charging information carried in the 183 message, so that the 180 message carries accurate charging information. For example, the 180 message is as follows:
SIP/2.0 180 Ringing
Call-ID: z9hG4***@10.26.6.151
**From:** <**tel:**+**13050********>;tag=0o360***
**To:** < **tel:**+**18241********>;tag=99wjm***
CSeq: 1 INVITE
Allow: INVITE, ACK, CANCEL, BYE, UPDATE, PRACK, MESSAGE, REFER, NOTIFY, INFO, OPTIONS
Contact: <sip:10.34.212.88:5060>;+g.3gpp.icsi-ref="urn%3Aum-7%3A3gpp-service.ims.icsi.mmtel" ;audio;video
**P-Asserted-Identity: tel:**+**18241** ******
**P-Charging-Vector:** icid-value="vpcssnk01.1b6.8e47.2020***"; orig-ioi=vscsrst01.ims.***.3gppnetwork.org; term-ioi=vscssnk01.ims.***.3gppnetwork.org
**P-Access-Network-Info:** 3GPP-E-UTRAN-TDD; utran-cell-id-3 gpp=520 ***;network-provided
Content-Length: 0

Information carried in P-Asserted-Identity, P-Charging-Vector, and P-Access-Network-Info is obtained based on the 183 message.

In another optional manner, step 402 may alternatively be performed after step 410. That is, after receiving a first 183 message sent by the called terminal, the media server generates a second 183 message based on charging information carried in the first 183 message, so that the second 183 message carries accurate charging information. In this case, whether the 180 message generated by the media server carries the charging information is not limited in this application.

It should be understood that, in the foregoing steps 402, 404, and 407, the media server simulates the called terminal to interact with the calling terminal.

408: The media server plays the first media content for the calling terminal.

The media server may determine, based on the SDP information of the calling terminal received in step 406, that if the calling terminal supports video playing, the media server determines to play a video, or an audio and a video for the calling terminal. If the calling terminal does not support video playing and supports only audio playing, the media server determines to play an audio for the calling terminal. Further, the first media content may be determined based on a characteristic of a calling user, or determined based on a setting of a calling/called user, or the like.

The media server sends a media stream of the first media content to the calling terminal. Correspondingly, the calling terminal receives the media stream of the first media content and plays the first media content.

409: After receiving the INVITE message in step 401, the media server may forward the INVITE message to the called terminal, to connect the called terminal.

410: The media server receives the 183 message returned by the called terminal.

For ease of description, the 183 message generated by the media server may be referred to as a first 183 message, and the 183 message generated by the called terminal may be referred to as a second 183 message.

The second 183 message carries SDP information of the called terminal, which is denoted as SDP_A1_2. The second 183 message is a response message for the INVITE message.

The second 183 message indicates that the called terminal has been connected, and is also a call status prompt message. Whether to play, for the calling terminal, status prompt multimedia indicating that the called terminal has been connected is not limited in this application. It should be understood that, if the status prompt multimedia indicating that the called terminal has been connected needs to be played for the calling terminal, for a specific method, refer to the descriptions of the embodiment shown in FIG. 3, or refer to the descriptions of step 414 below. Details are not described herein again.

If the 180 message in step 407 does not carry the accurate charging information, the media server may further send the 183 message to the calling terminal, and/or the media server may send the 180 message to the calling terminal after step 413 (receiving the 180 message sent by the called terminal), to transfer the accurate charging information.

If the 180 message in step 407 carries the accurate charging information, the media server does not need to transfer the accurate charging information again. Therefore, the media server may not send the 183 message to the calling terminal. The media server may not send the 180 message to the called terminal after step 413 (receiving the 180 message sent by the called terminal). Details are not described in subsequent step 413.

411: The media server sends an acknowledgment message (PRACK) for the second 183 message to the called terminal.

412: The media server receives a 200 response message, for the PRACK message, returned by the called terminal.

In this way, the media server simulates the calling terminal to answer by using the foregoing messages, and interacts with the called terminal.

A process (for example, steps 409 to 412) of interaction between the media server (simulating the calling terminal) and the called terminal may be processed in parallel with a process (for example, steps 402 to 406) of interaction between the media server (simulating the called terminal) and the calling terminal. This is not limited in this application.

413: The called terminal rings, and the called terminal sends a 180 message to the media server.

For ease of description, the 180 message generated by the media server may be referred to as a first 180 message, and the 180 message generated by the called terminal may be referred to as a second 180 message.

414: The media server plays a multimedia ring back tone or status prompt multimedia for the calling terminal.

The media server receives the second 180 message. Further, there may be a plurality of cases.
1. The second 180 message is a normal ringing message, that is, the second 180 message indicates that the called terminal rings and the called terminal is in an idle state.

The media server may continue to play the first media content. This case may also be considered as continuing to play the first media content as a ring back tone.

The media server may further stop playing the first media content. A ring back tone server plays the ring back tone for the calling terminal, or the TAS plays ringing media (for example, a beep tone) for the calling terminal. A related method for playing the ring back tone for the calling terminal is first described.
(1) The media server and the ring back tone server are integrated, that is, the media server is also responsible for playing the multimedia ring back tone. If the media server determines to play the ring back tone for the calling terminal (for example, determines that the called user has subscribed to a ring back tone service), the media server may continue to play the first media content (where the first media content may also be referred to as the ring back tone) for the calling terminal. The media server may alternatively stop playing the first media content and play new media content (where the new media content is a ring back tone, and is specifically an audio, a video, or an audio and a video). Specifically, the media server may immediately stop playing the first media content and play the new media content, or may play the new media content after ending playing the first media content, or may play the new media content after the first media content is played for fixed duration (for example, 3 seconds).
   In this case, the media server and the calling terminal may continue to use a media channel established through negotiation in steps 405 and 406 without performing media renegotiation. It should be understood that the media server may alternatively perform renegotiation (for example, when a media type of the ring back tone service is inconsistent with a media type of the screen media ring service). This is not limited in this application.
(2) The media server and the ring back tone server are separately deployed. In this case, the media server stops playing the first media content. The ring back tone server negotiates ring back tone media with the calling terminal, and plays the ring back tone for the calling terminal based on a negotiation result. Details are not described again.

In addition, a method for the TAS to play the ringing media (for example, the beep tone) for the calling terminal is not described herein again.

2. The second 180 message indicates that the called terminal rings and the called terminal is in a non-idle state.

The non-idle state may be specifically a call transfer state, a call waiting state, or the like. In this case, notifying the calling user of the call status (where the called terminal is in the non-idle state) facilitates a smooth call procedure. Therefore, this application proposes to play the status prompt multimedia for the calling terminal. Specifically, the media server or the TAS plays the status prompt multimedia for the calling terminal.

The media server receives the second 180 message. The second 180 message indicates the call status, and therefore may also be referred to as a call status prompt message. The media server determines corresponding status prompt multimedia based on the second 180 message. For example, the second 180 message carries a call-waiting field (alert-info:urn:alert:service:call-waiting) to indicate the call waiting state, and the media server determines status prompt multimedia for call waiting based on the second 180 message. Further, the media server may send a media stream of the status prompt multimedia to the calling terminal, to play the status prompt multimedia for the calling terminal. A specific method is similar to the foregoing method for playing the ring back tone by the media server, and details are not described herein again.

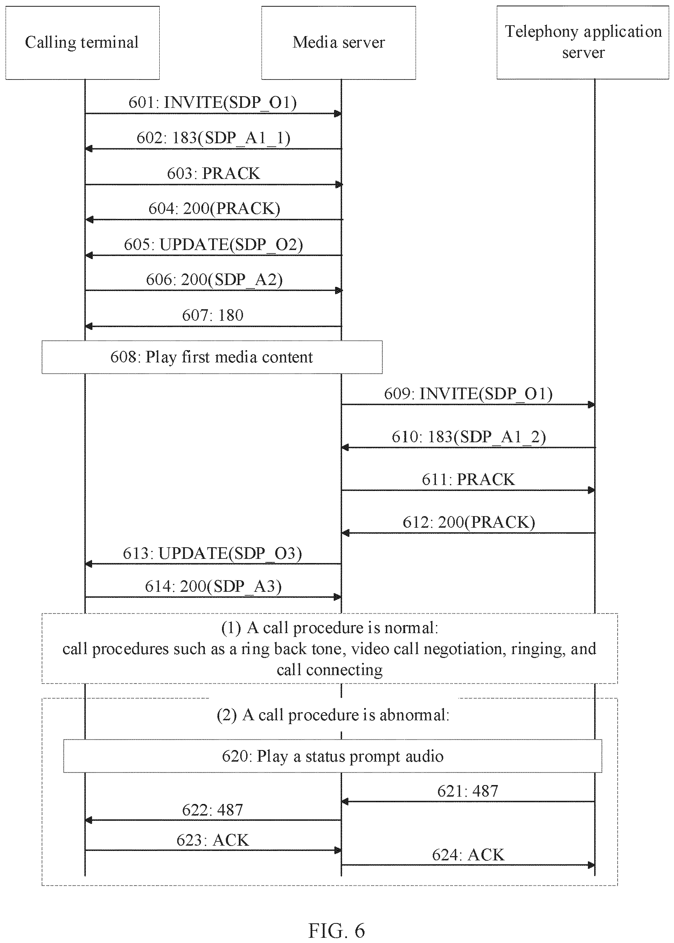

In addition, a method for the TAS to play the status prompt multimedia for the calling terminal is not described herein again. For details, refer to steps 613 and 614, steps 620 to 624, and the like in the embodiment shown in FIG. 6.

After the called terminal rings, if the called user picks up the phone, calling and called parties negotiate a call. A procedure is briefly as follows:
415: The called user picks up the phone.
416: The called terminal sends a 200 message after the called user picks up the phone.
417 and 418: After receiving the 200 message, the media server stops playing the ring back tone or the status prompt multimedia for the calling terminal, and returns an ACK message to the called terminal.

It should be understood that, if the ring back tone server plays the ring back tone in step 414, the ring back tone server stops playing the ring back tone. If the TAS plays the status prompt multimedia in step 414, the TAS stops playing the status prompt multimedia.

419 to 426: The media server triggers call media renegotiation between the calling terminal and the called terminal, to establish a call between the calling terminal and the called terminal.

Specifically, the media server sends a renegotiation request (Re-INVITE message) to the called terminal. The called terminal sends a 200 message in response to the Re-INVITE message, where the 200 message carries the media information (SDP information) of the called terminal. The media server sends a media update request (UPDATE message) to the calling terminal, where the media update request carries the media information of the called terminal. The calling terminal returns a 200 message in response to the UPDATE message, where the 200 message carries the media information answered by the calling terminal. The media server forwards a called off-hook 200 OK message received in step 415 to the calling terminal. The calling terminal returns an ACK message in response to the called off-hook 200 OK message. The media server sends an ACK message for the Re-INVITE message to the called terminal, where the ACK message carries the media information answered by the calling terminal. Then, the call between the calling party and the called party is established.

It should be understood that, if the ring back tone server plays the ring back tone in step 414, the ring back tone server is responsible for triggering call media renegotiation between the calling terminal and the called terminal. If the TAS plays the status prompt multimedia in step 414, the TAS stops playing the status prompt multimedia, and triggers call media renegotiation between the calling terminal and the called terminal.

In the method embodiment shown in FIG. 4, the media server generates the ringing message, and sends the ringing message to the calling terminal, to simulate a scenario in which the called terminal rings, so that the calling terminal can be provided with the first media content during call initiation without waiting for the called terminal to ring. Further, after the called terminal rings, the media server, the ring back tone server, or the TAS may play the ring back tone, the status prompt multimedia, or the like for the calling terminal.

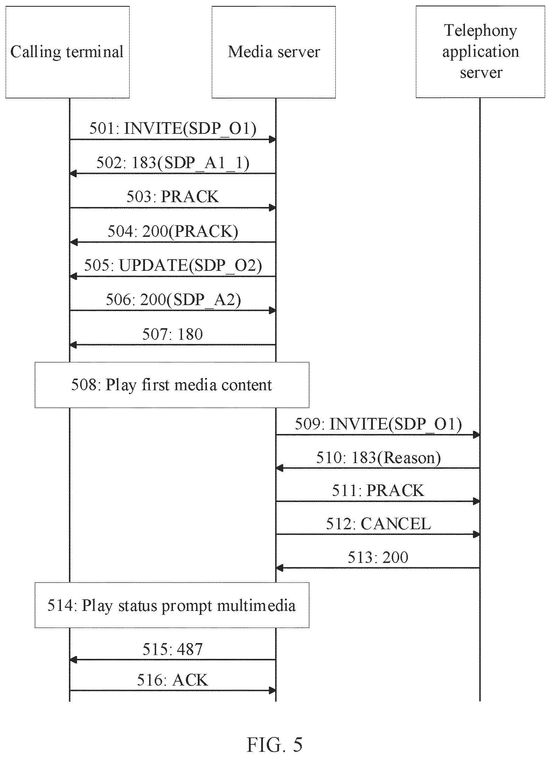

In an example, FIG. 5 provides a specific call processing method. A media server may be in a calling domain, or may be in a called domain. A TAS is in the called domain. To make descriptions concise and easy to understand, some network elements such as an SBC/P-CSCF and an I-CSCF/S-CSCF used for signaling exchange are not shown in the figure. In the method, the media server sends a ringing message generated by the media server to a calling terminal without waiting for a called terminal to ring, to provide first media content during call initiation for the calling terminal. Further, when the called terminal is in an unreachable state, the media server plays corresponding status prompt multimedia for the calling terminal to notify a calling user of a corresponding call status. This facilitates a smooth call procedure. The method specifically includes the following steps.

501 to 508: The calling terminal initiates a call request to the called terminal. After receiving the call request, the media server performs media negotiation with the calling terminal, generates a ringing message, and sends the ringing message to the calling terminal, so that the media server plays the first media content for the calling terminal. For specific content, refer to steps 401 to 408 in the embodiment shown in FIG. 4. Details are not described herein again.

509: After receiving the INVITE message in step 501, the media server may forward the INVITE message to the called terminal, to connect the called terminal.

510 and 511: The media server receives a 183 message, and sends a PRACK message for the 183 message to a called side.

The 183 message indicates a call status, that is, a call status prompt message. Specifically, the 183 message indicates that the called terminal is in the unreachable state (including but not limited to: power-off, network unreachable, an unobtainable number, suspension, and the like). For example, the 183 message carries an unreachable reason (Reason) to indicate the unreachable state (where a Reason header field carries Q.850 code information).

The media server determines corresponding status prompt multimedia based on the 183 message. For example, the media server determines a corresponding unreachable scenario (that is, a specific call status) based on the unreachable reason carried in the 183 message, and further determines corresponding status prompt multimedia based on the unreachable scenario.

In addition, for whether the media server sends the 183 message to the calling terminal, refer to the descriptions of step 410 in the embodiment shown in FIG. 4. Details are not described herein again.

512 and 513: The media server sends a CANCEL message to the called side to release a call resource of the called side, and receives a 2000K message, for the CANCEL message, sent by the called side.

After determining that the called terminal is in the unreachable state, the media server triggers the called side to release the call resources.

514: The media server plays the status prompt multimedia for the calling terminal.

Specifically, the media server may play the status prompt multimedia for the calling terminal through an existing media channel, that is, the media server sends a media stream of the status prompt multimedia to the calling terminal based on a result of the media negotiation in steps 505 and 506. Correspondingly, the calling terminal receives the media stream of the status prompt multimedia based on the result of the negotiation, and plays the status prompt multimedia. The media server may immediately stop playing the first media content for the calling terminal and play the status prompt multimedia, or may play the status prompt multimedia after ending playing the first media content, or may play the status prompt multimedia after the first media content is played for fixed duration (for example, 3 seconds).

It should be understood that the media server may alternatively perform renegotiation (for example, when a media type of the status prompt multimedia is inconsistent with a media type of the first media content). This is not limited in this application.

In addition, the media server may alternatively play the status prompt multimedia and the first media content simultaneously, for example, send a video stream of the first media content to the calling terminal through a video channel, and send an audio stream of the status prompt multimedia to the calling terminal through an audio channel. Therefore, the calling terminal plays the received video stream of the first media content, plays a video of the first media content, receives the audio stream of the status prompt multimedia, and plays an audio of the status prompt multimedia.

515 and 516: The media server sends a call termination message (for example, a 487 message) to the calling terminal, and receives an ACK message, for the call termination message, sent by the calling terminal.

After playing of the status prompt multimedia ends, if the calling terminal still does not hang up, the media server sends the 487 message to disconnect a call from the calling terminal, that is, this call process is terminated and the call resource is released.

It should be understood that, if the calling user hangs up in a process of playing the status prompt multimedia, the calling terminal sends a call termination message. Correspondingly, the media server receives the call termination message sent by the calling terminal, and sends an ACK message for the call termination message to the calling terminal. In this case, the media server does not need to trigger the calling terminal to disconnect the call.

If the media server receives the call termination message (for example, the 487 message) sent by the called side in the process of playing the status prompt multimedia by the media server for the calling terminal, steps 512 and 513 may not be performed. Further, the media server may directly forward the call termination message to the calling terminal, or forward the call termination message to the calling terminal after playing the status prompt multimedia for fixed duration (for example, 3 seconds). Alternatively, the media server temporarily does not send the call termination message to the calling terminal, but sends an ACK message for the call termination message to the called side, and sends the call termination message to the calling terminal after playing of the status prompt multimedia ends.

An execution sequence of the steps in FIG. 5 is an example. For example, an execution sequence of step 514 and step 512 is not limited in this application. In addition, in this embodiment of this application, the media server may be in the calling domain, or may be in the called domain. It should be understood that, if the media server is in the called domain, when iFC is configured, the media server is configured before the TAS, so that the media server can receive the call status prompt message sent by the TAS.

In an example, FIG. 6 provides a specific call processing method. A media server may be in a calling domain, or may be in a called domain. A TAS is in the called domain. To make descriptions concise and easy to understand, some network elements such as an SBC/P-CSCF and an I-CSCF/S-CSCF used for signaling exchange are not shown in the figure. In the method, the media server sends a ringing message generated by the media server to a calling terminal without waiting for a called terminal to ring, to provide first media content during call initiation for the calling terminal. Further, the TAS is responsible for playing status prompt multimedia. The method specifically includes the following steps.

601 to 608: The calling terminal initiates a call request to the called terminal. After receiving the call request, the media server performs media negotiation with the calling terminal, generates a ringing message, and sends the ringing message to the calling terminal, so that the media server plays the first media content for the calling terminal. For specific content, refer to steps 401 to 408 in the embodiment shown in FIG. 4. Details are not described herein again.

609: After receiving the INVITE message in step 601, the media server may forward the INVITE message to the called terminal, to connect the called terminal.

610 and 611: The media server receives a 183 message, and sends a PRACK message for the 183 message to a called side.

For ease of description, a 183 message generated by the media server may be referred to as a first 183 message, and a 183 message generated by the TAS or the called terminal may be referred to as a second 183 message.

The second 183 message carries SDP information of the called side, which is denoted as SDP_A1_2. The second 183 message is a response message for the INVITE message. The called side herein is specifically the TAS or the called terminal. That is, the second 183 message may be generated and sent by the TAS, or generated and sent by the called terminal. For details, refer to the descriptions of step 307 in the embodiment shown in FIG. 3.

613 and 614: The media server performs media negotiation with the calling terminal.

The media server may replace audio media information in SDP information used for negotiation with the calling terminal in step 605 with audio media information in the SDP information of the called side carried in the second 183 message, to initiate media update to the calling terminal. When media is updated, the media server may reserve video media information in the SDP information used for negotiation with the calling terminal in step 605, so that continuous playing of video media of the first media content is not affected. It should be understood that, during negotiation in 613 and 614, a media channel negotiated in 605 and 606 may be not considered, but the media channel is directly updated to a media channel between the calling terminal and the TAS on the called side. This is not limited in this application. The following describes in detail a case in which a video channel negotiated between the calling terminal and the media server in 605 and 606 is reserved.

For ease of description, a negotiation case in steps 605 and 606 is first described. In step 605, the media server sends a first media negotiation request message (first UPDATE message) to the calling terminal, where the first UPDATE message carries first video media information (SDP_O2_VIDEO1) of the media server. The media server further receives a first media negotiation response message (first 200 message) sent by the calling terminal, where the first 200 message carries second video media information (SDP_A2_VIDEO1) of the calling terminal. It should be understood that audio media negotiation may further be included. This is not limited herein. That is, the first media content played in step 608 may include an audio and a video, and the first media content played in step 608 may also include only a video (that is, screen media ring media is played in mute mode). In addition, even if audio media is negotiated in steps 605 and 606, in step 608, the media server may play the video of the first media content for the calling terminal through only the video channel (that is, play in mute mode).

A negotiation case in step 613 is specifically as follows: The media server sends a second media negotiation request message (second UPDATE message) to the calling terminal. The second UPDATE message carries the first video media information (SDP_O2_VIDEO1) of the media server. The second UPDATE message further carries audio media information of the called side, that is, the audio information in the SDP information (SDP_A1_2) of the called side carried in the 183 message in step 610. The media server further receives a second media negotiation response message (second 200 message) sent by the calling terminal, where the second 200 message carries the second video media information (SDP_A2_VIDEO1) of the calling terminal and fourth audio media information of the calling terminal. The fourth audio media information is determined based on the audio media information of the called side and an audio media capability of the calling terminal. For specific content of the media information, refer to the descriptions of the embodiment shown in FIG. 3, for example, the descriptions after step 311.

Further, the media server continues to send a video media stream of the first media content to the calling terminal based on the first video media information and the second video media information. Correspondingly, the calling terminal receives the video media stream of the first media content based on the first video media information and the second video media information, and plays the video of the first media content. In this case, the media server is not responsible for a call status prompt function, and the media server may not identify a call status corresponding to the second 183 message. In another optional manner, the media server may alternatively determine a corresponding status prompt video based on the second 183 message, to play the status prompt video (no audio) for the calling terminal. That is, the media server sends a video media stream of the status prompt video to the calling terminal based on the first video media information and the second video media information. Correspondingly, the calling terminal receives the video media stream of the status prompt video based on the first video media information and the second video media information, and plays the status prompt video.

To clearly describe execution methods of this solution in different cases, whether the audio channel is used is discussed in different cases.

### (1) A call procedure is normal.

In this case, the second 183 message indicates that the call procedure is normal, for example, the call is connected. The second 183 message carries the audio media information of the called terminal. Because the call between the calling terminal and the called terminal is not connected, the audio channel does not transmit audio media.

In step 608, the media server may play the first media content in mute mode for the calling terminal, and no audio media is transmitted on the audio channel obtained through negotiation in step 614. Therefore, a case in which the audio of the first media content is originally played for the calling terminal but no audio is suddenly played does not occur. This prevents the calling user from hanging up the call because the calling user mistakenly considers that a mobile phone or the call procedure is abnormal and the like.

In addition, if the called side initiates video negotiation because of a service such as a video ring back tone or video call switching, the media server transparently transmits a video negotiation message of the called side, and stops playing the first media content. For details, refer to the foregoing descriptions. Details are not described herein again.

For a subsequent call procedure, refer to the descriptions of steps 413 to 426 and the like in the embodiment shown in FIG. 4. Details are not described herein again.

(2) A call procedure is abnormal. For example, the called terminal is in an unreachable state.

In this case, the second 183 message indicates that the call procedure is abnormal. The second 183 message carries the audio media information of the TAS. The TAS is responsible for playing an audio of status prompt multimedia (which may also be referred to as a status prompt audio) for the calling terminal. Details are as follows:

620: The TAS sends an audio media stream of the status prompt multimedia to the calling terminal based on the third audio media information and the fourth audio media information. Correspondingly, the calling terminal receives the audio media stream of the status prompt multimedia based on the third audio media information and the fourth audio media information, and plays the audio of the status prompt multimedia.

621 and 622: The TAS sends a 487 message to disconnect the call after ending playing the audio of the status prompt multimedia.

After receiving the 487 message, the media server also stops playing the video and transparently transmits the 487 message.

623 and 624: After receiving the 487 message, the calling terminal returns an ACK message for the 487 message.

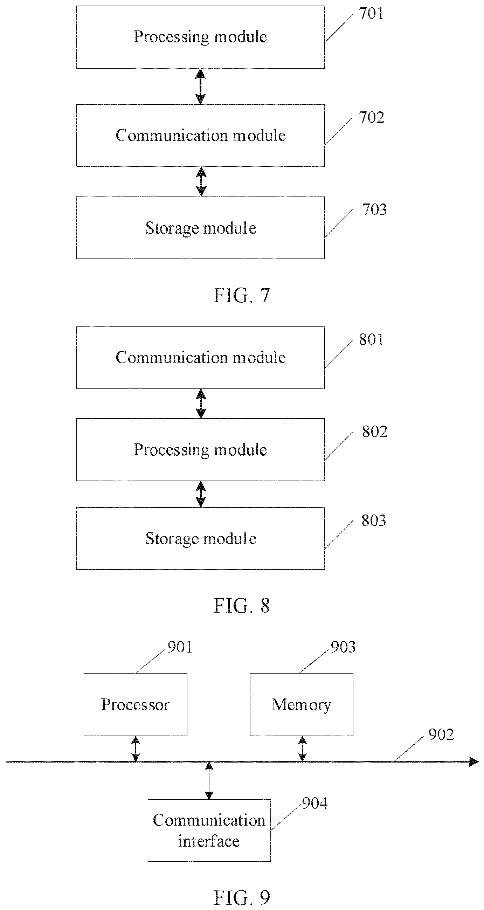

FIG. 7 is a schematic diagram of a structure of a media server according to an embodiment of this application. The media server has a function of implementing an action of the media server in the foregoing embodiments. Specifically, the media server includes a processing module 701 and a communication module 702. The communication module 702 may specifically include a receiving module and a sending module. The processing module 701 is configured to control and manage an action of the media server. The communication module 702 is configured to support communication between the media server and another device (for example, a terminal device, and/or a CSCF device). The media server may further include a storage module 703, configured to store program code of the media server and the like.

The processing module 701 may support the media server in performing an action of the media server in the foregoing method examples, for example, may support the media server in performing steps 303 and 308 in FIG. 3, steps 402 to 407 in FIG. 4, steps 502 to 508 in FIG. 5, and steps 602 to 608 in FIG. 6.

The communication module 702 may support communication between the media server and another device, for example, may support the media server in performing steps 301, 302, 304 to 307, 309, and 310 in FIG. 3, steps 401 to 412 in FIG. 4, steps 501 to 516 in FIG. 5, and steps 601 to 614 and 621 to 624 in FIG. 6.

It should be understood that the foregoing example actions are optional, and the processing module 701 and the communication module 702 may alternatively selectively support the media server in performing some of the actions. In addition, modules of the media server may be integrated or separated. This is not limited in this application. For example, the processing module 701 may also have sending and receiving functions and/or a storage function.

In a simple embodiment, a person skilled in the art may figure out that the media server may be implemented in the form shown in FIG. 9.

FIG. 8 is a schematic diagram of a structure of a terminal device according to an embodiment of this application. The terminal device has a function of implementing an action of the calling terminal in the foregoing embodiments. Specifically, the terminal device includes a communication module 801, and the communication module 801 may specifically include a receiving module and a sending module. The terminal device may further include a processing module 802, and the processing module 802 is configured to control and manage an action of the terminal device. The communication module 801 is configured to support communication between the terminal device and another device (for example, a terminal device, and/or a CSCF device). The terminal device may further include a storage module 803, configured to store program code of the terminal device and the like. The terminal device may further include a playing module 804, configured to play media (including an audio and/or a video).

The communication module 801 may support communication between the terminal device and another device, for example, may support the terminal device in performing steps 301, 302, 304 to 307, 309, and 310 in FIG. 3, steps 401 to 412 in FIG. 4, steps 501 to 516 in FIG. 5, and steps 601 to 614 and 621 to 624 in FIG. 6.

The processing module 802 may support the terminal device in performing an action of the terminal device in the foregoing method examples, for example, may support the terminal device in performing steps 301 and 308 in FIG. 3, steps 402 to 407 in FIG. 4, steps 502 to 508 in FIG. 5, and steps 602 to 608 in FIG. 6.

The playing module 804 may support the terminal device in performing media playing, for example, may support the terminal device in performing steps 305, 309, and 311 in FIG. 3, steps 408 and 411 in FIG. 4, steps 508 and 514 in FIG. 5, and steps 608 and 620 in FIG. 6.

It should be understood that the foregoing example actions are optional, and each module may alternatively support the terminal device in performing some of the actions. In addition, modules of the terminal device may be integrated or separated. This is not limited in this application.

In a simple embodiment, a person skilled in the art may figure out that the terminal device may be implemented in the form shown in FIG. 9.

FIG. 9 is a schematic diagram of a structure of an apparatus 900 according to an embodiment of this application. The apparatus 900 may be specifically a media server, a terminal device, or the like.

The apparatus 900 may include at least one processor 901, a communication bus 902, a memory 903, a communication interface 904, and an I/O interface. The processor may be a general-purpose central processing unit (CPU), a microprocessor, an application-specific integrated circuit (application-specific integrated circuit, ASIC), or one or more integrated circuits configured to control program execution in the solutions of this application.

The communication bus may include a path for information transfer between the foregoing components. The communication interface uses any apparatus such as a transceiver, and is configured to communicate with another device or a communication network, for example, the Ethernet, a radio access network (RAN), or a wireless local area network (Wireless Local Area Network, WLAN).

The memory may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and can be accessed by a computer, but is not limited thereto. The memory may exist independently, and is connected to the processor through the bus. Alternatively, the memory may be integrated with the processor.

The memory is configured to store program code for executing the solutions of this application, and the processor controls execution of the program code. The processor is configured to execute the program code stored in the memory.

In a specific implementation, the processor may include one or more CPUs, and each CPU may be a single-core (single-core) processor, or may be a multi-core (multi-Core) processor. The processor herein may be one or more devices, circuits, and/or processing cores configured to process data (for example, computer program instructions).

In a specific implementation, in an embodiment, the apparatus may further include the input/output (I/O) interface. For example, an output device may be a liquid crystal display (liquid crystal display, LCD), a light emitting diode (light emitting diode, LED) display device, a cathode ray tube (cathode ray tube, CRT) display device, a projector (projector), or the like. An input device may be a mouse, a keyboard, a touchscreen device, a sensor device, or the like.

It should be noted that the structure shown in FIG. 9 does not constitute a limitation on the apparatus 900. In addition to the components shown in FIG. 9, the apparatus 900 may include more or fewer components than those shown in the figure, combine some components, or have different component arrangements.

Each apparatus such as the media server or the terminal device in embodiments of this application may use the structure of the apparatus 900 shown in FIG. 9.

For example, for the media server, when the processor in the media server executes executable code or an application program stored in the memory, the media server may perform the method steps corresponding to the media server in the foregoing embodiments. For a specific execution process, refer to the foregoing embodiments. Details are not described herein again.

For example, for the terminal device, when the processor in the terminal device executes executable code or an application program stored in the memory, the terminal device may perform the method steps corresponding to the terminal device in the foregoing embodiments. For a specific execution process, refer to the foregoing embodiments. Details are not described herein again.

In embodiments of this application, the terms "second" and "first" are merely used for description, and shall not be understood as an indication or implication of relative importance or an implicit indication of a quantity of indicated technical features. Therefore, a feature limited by "second" and "first" may explicitly or implicitly include one or more features. In descriptions of this application, unless otherwise stated, "a plurality of" means two or more.

The term "at least one" in this application means one or more, and the term "a plurality of" in this application means two or more. For example, a plurality of first packets means two or more first packets.

It should be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It should be further understood that the term "and/or" used in this specification refers to and covers any combination and all possible combinations of one or more of the associated listed items. The term "and/or" describes an association relationship between associated objects, and indicates that three relationships may exist. For example, A and/or B may indicate the following three cases: Only A exists, both A and B exist, and only B exists. In addition, the character "/" in this application usually indicates an "or" relationship between associated objects. It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application. A person of ordinary skill in the art may be aware that, the modules and algorithm steps in the examples described with reference to embodiments disclosed in this specification can be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions of each particular application, but it should not be considered that the implementation goes beyond the scope of this application. A person of ordinary skill in the art may be aware that, the modules and algorithm steps in the examples described with reference to embodiments disclosed in this specification can be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

A person of ordinary skill in the art may clearly understand that, for the purpose of convenient and brief description, for a detailed working process of the foregoing system, apparatuses, and units, refer to a corresponding process in the foregoing method embodiments. Details are not described herein again.

In the several embodiments provided in this application, it should be understood that the disclosed systems, apparatuses, and methods may be implemented in other manners. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the apparatuses or modules, or electrical connections, mechanical connections, or connections in other forms.

The modules described as separate parts may or may not be physically separate, and parts displayed as modules may or may not be physical modules, that is, may be located in one position, or may be distributed on multiple network modules. Some or all of the modules may be selected based on actual requirements to achieve the objectives of the solutions in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on this understanding, the technical solutions of this application essentially, or the part that contributes to the conventional technology, or all or some of the technical solutions may be implemented in a form of a computer program product, and the computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer program product is stored in a computer-readable storage medium or is transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The foregoing descriptions are merely specific implementations of this application, but the protection scope of this application is not limited thereto. Various equivalent modifications or replacements readily figured out by a person skilled in the art within the technical scope disclosed in this application shall fall within the protection scope of this application. Therefore, the protection scope of this application shall be subject to the protection scope of the claims.

## Claims

1. A call processing method, applied to a media server, and comprising:
receiving a call request sent by a calling terminal;
performing media negotiation with the calling terminal;
generating a 180 message, and sending the 180 message to the calling terminal; and
sending a media stream of first media content to the calling terminal based on a result of the media negotiation.

2. The method according to claim 1, wherein the 180 message indicates that charging is not performed based on the 180 message, and the method further comprises:
receiving a response message sent by a called terminal, and sending the response message to the calling terminal, wherein the response message carries charging information.

3. The method according to claim 1, further comprising: receiving a 183 message sent by a called terminal, wherein
the generating a 180 message comprises: generating the 180 message based on charging information carried in the 183 message, wherein the 180 message carries the charging information.

4. The method according to any one of claims 1 to 3, wherein the generating a 180 message comprises:
generating the 180 message based on indication information that is of a type of the calling terminal and that is carried in the call request or indication information that is of a network access type and that is carried in the call request; or
generating the 180 message based on that the call request does not carry indication information for supporting a screen media ring service.

5. The method according to any one of claims 1 to 4, further comprising:
receiving a call status prompt message;
determining status prompt multimedia based on the call status prompt message; and
sending a media stream of the status prompt multimedia to the calling terminal.

6. The method according to claim 5, further comprising:
determining, based on the call status prompt message, that the called terminal is in an unreachable state; and
triggering a called side to release a call resource.

7. The method according to any one of claims 1 to 4, further comprising:
receiving a call status prompt message;
after receiving the call status prompt message, performing audio media negotiation and video media negotiation with the calling terminal, wherein a result of the audio media negotiation is used to send an audio media stream of status prompt multimedia to the calling terminal; and
sending a video media stream of the first media content to the calling terminal based on a result of the video media negotiation.

8. The method according to claim 7, wherein the call status prompt message carries third audio media information of a telephony application server;
the performing media negotiation with the calling terminal specifically comprises:
sending a first media negotiation request message to the calling terminal, wherein the first media negotiation request message carries first video media information of the media server; and
receiving a first media negotiation response message sent by the calling terminal, wherein the first media negotiation response message carries second video media information of the calling terminal; and
the performing audio media negotiation and video media negotiation with the calling terminal specifically comprises:
sending a second media negotiation request message to the calling terminal, wherein the second media negotiation request message carries the first video media information and the third audio media information; and
receiving a second media negotiation response message sent by the calling terminal, wherein the second media negotiation response message carries the second video media information and fourth audio media information of the calling terminal, the result of the video media negotiation comprises the first video media information and the second video media information, and the result of the audio media negotiation comprises the third audio media information and the fourth audio media information.

9. A call processing method, applied to a calling terminal, comprising:
sending a call request to a called terminal;
performing media negotiation with a media server;
receiving a 180 message, wherein the 180 message is generated by the media server; and
receiving, based on a result of the media negotiation, a media stream that is of first media content and that is sent by the media server, and playing the first media content.

10. The method according to claim 9, wherein the 180 message indicates that charging is not performed based on the 180 message, and the method further comprises:
receiving a response message, wherein the response message carries charging information.

11. The method according to claim 9 or 10, further comprising:
performing audio media negotiation and video media negotiation with the media server;
receiving, based on a result of the video media negotiation, a video media stream that is of the first media content and that is sent by the media server, and playing a video of the first media content; and
receiving, based on a result of the audio media negotiation, an audio media stream that is of status prompt multimedia and that is sent by a telephony application server, and playing an audio of the status prompt multimedia.

12. The method according to claim 11, wherein
the performing media negotiation with a media server comprises:
receiving a first media negotiation request message sent by the media server, wherein the first media negotiation request message carries first video media information of the media server; and
sending a first media negotiation response message to the media server, wherein the first media negotiation response message carries second video media information of the calling terminal; and
the performing audio media negotiation and video media negotiation with the media server comprises:
receiving a second media negotiation request message sent by the media server, wherein the second media negotiation request message carries the first video media information and third audio media information of the telephony application server; and
sending a second media negotiation response message to the media server, wherein the second media negotiation response message carries the second video media information and fourth audio media information of the calling terminal, the result of the video media negotiation comprises the first video media information and the second video media information, and the result of the audio media negotiation comprises the third audio media information and the fourth audio media information.

13. A media server, comprising a communication module and a processing module, wherein
the communication module is configured to: receive a call request sent by a calling terminal, and perform media negotiation with the calling terminal;
the processing module is configured to generate a 180 message; and
the communication module is further configured to: send the 180 message to the calling terminal, and send a media stream of first media content to the calling terminal based on a result of the media negotiation.

14. The media server according to claim 13, wherein the 180 message indicates that charging is not performed based on the 180 message, and the communication module is further configured to:
receive a response message sent by a called terminal, and send the response message to the calling terminal, wherein the response message carries charging information.

15. The media server according to claim 13, wherein the communication module is further configured to receive a 183 message sent by a called terminal; and
that the processing module is configured to generate a 180 message comprises: the processing module is configured to generate the 180 message based on charging information carried in the 183 message, wherein the 180 message carries the charging information.

16. The media server according to any one of claims 13 to 15, wherein that the processing module is configured to generate a 180 message comprises:
the processing module is configured to generate the 180 message based on indication information that is of a type of the calling terminal and that is carried in the call request or indication information that is of a network access type and that is carried in the call request; or
the processing module is configured to generate the 180 message based on that the call request does not carry indication information for supporting a screen media ring service.

17. The media server according to any one of claims 13 to 16, wherein
the communication module is further configured to receive a call status prompt message;
the processing module is further configured to determine status prompt multimedia based on the call status prompt message; and
the communication module is further configured to send a media stream of the status prompt multimedia to the calling terminal.

18. The media server according to claim 17, wherein the processing module is further configured to:
determine, based on the call status prompt message, that the called terminal is in an unreachable state; and
trigger a called side to release a call resource.

19. The media server according to any one of claims 13 to 16, wherein the communication module is further configured to:
receive a call status prompt message;
after receiving the call status prompt message, perform audio media negotiation and video media negotiation with the calling terminal, wherein a result of the audio media negotiation is used to send an audio media stream of status prompt multimedia to the calling terminal; and
send a video media stream of the first media content to the calling terminal based on a result of the video media negotiation.

20. The media server according to claim 19, wherein the call status prompt message carries third audio media information of a telephony application server;
that the communication module is configured to perform media negotiation with the calling terminal specifically comprises:
the communication module is configured to send a first media negotiation request message to the calling terminal, wherein the first media negotiation request message carries first video media information of the media server; and
the communication module is configured to receive a first media negotiation response message sent by the calling terminal, wherein the first media negotiation response message carries second video media information of the calling terminal; and
that the communication module is configured to perform audio media negotiation and video media negotiation with the calling terminal specifically comprises:
the communication module is configured to send a second media negotiation request message to the calling terminal, wherein the second media negotiation request message carries the first video media information and the third audio media information; and
the communication module is configured to receive a second media negotiation response message sent by the calling terminal, wherein the second media negotiation response message carries the second video media information and fourth audio media information of the calling terminal, the result of the video media negotiation comprises the first video media information and the second video media information, and the result of the audio media negotiation comprises the third audio media information and the fourth audio media information.

21. A terminal device, wherein the terminal device is a calling terminal, and comprises a communication module, wherein the communication module is configured to:
send a call request to a called terminal, and perform media negotiation with a media server;
receive a 180 message, wherein the 180 message is generated by the media server; and
receive, based on a result of the media negotiation, a media stream that is of first media content and that is sent by the media server, and play the first media content.

22. The terminal device according to claim 21, wherein the 180 message indicates that charging is not performed based on the 180 message, and the communication module is further configured to: receive a response message, wherein the response message carries charging information.

23. The terminal device according to claim 21 or 22, wherein
the communication module is further configured to:
perform audio media negotiation and video media negotiation with the media server;
receive, based on a result of the video media negotiation, a video media stream that is of the first media content and that is sent by the media server; and
receive, based on a result of the audio media negotiation, an audio media stream that is of status prompt multimedia and that is sent by a telephony application server; and
the terminal device further comprises a playing module, and the playing module is configured to: play an audio of the status prompt multimedia based on the audio media stream of the status prompt multimedia, and play a video of the first media content based on the video media stream of the first media content.

24. The terminal device according to claim 23, wherein
that the communication module is configured to perform media negotiation with a media server comprises:
the communication module is configured to receive a first media negotiation request message sent by the media server, wherein the first media negotiation request message carries first video media information of the media server; and
the communication module is configured to send a first media negotiation response message to the media server, wherein the first media negotiation response message carries second video media information of the calling terminal; and
that the communication module is configured to perform audio media negotiation and video media negotiation with the media server comprises:
the communication module is configured to receive a second media negotiation request message sent by the media server, wherein the second media negotiation request message carries the first video media information and third audio media information of the telephony application server; and
the communication module is configured to send a second media negotiation response message to the media server, wherein the second media negotiation response message carries the second video media information and fourth audio media information of the calling terminal, the result of the video media negotiation comprises the first video media information and the second video media information, and the result of the audio media negotiation comprises the third audio media information and the fourth audio media information.

25. A call processing system, comprising: a media server and a terminal device, wherein
the media server is configured to perform the method according to claims 1 to 8; and
the terminal device is configured to perform the method according to claims 9 to 12.

26. The system according to claim 25, further comprising a telephony application server, wherein
the telephony application server is configured to:
receive a call request sent by the terminal device, wherein the call request carries fourth audio media information of a calling terminal;
send a call status prompt message to the terminal device, wherein the call status prompt message carries third audio media information of the telephony application server; and
send an audio media stream of status prompt multimedia to the terminal device based on the third audio media information and the fourth audio media information.
